**Europäisches Patentamt**

**European Patent Office**

**Office européen des brevets**

(19)

(11) Veröffentlichungsnummer : **0 380 764 B1**

## (12) EUROPÄISCHE PATENTSCHRIFT

(45) Veröffentlichungstag der Patentschrift :
06.05.92 Patentblatt 92/19

(51) Int. Cl.⁵ : **G01B 11/16**

(21) Anmeldenummer : **89119983.8**

(22) Anmeldetag : **27.10.89**

(54) **Messeinrichtung mit einem Lichtwellenleiter-Biegesensor zur Überwachung von Brückenbauteilen oder dergleichen.**

(30) Priorität : **02.02.89 DE 3902997**

(43) Veröffentlichungstag der Anmeldung :
**08.08.90 Patentblatt 90/32**

(45) Bekanntmachung des Hinweises auf die
Patenterteilung :
**06.05.92 Patentblatt 92/19**

(84) Benannte Vertragsstaaten :
**AT BE CH DE ES FR GB IT LI NL SE**

(56) Entgegenhaltungen :
**DE-A- 3 415 855**
**DE-A- 3 635 053**
**GB-A- 2 145 516**

(73) Patentinhaber : **Felten & Guilleaume Energietechnik AG**
**Schanzenstrasse 24-30 Postfach 80 50 01**
**W-5000 Köln 80 (DE)**

(72) Erfinder : **Lessing, Rainer, Dr.**
**Am Berg 21**
**W-5226 Reichshof (DE)**

**Beschreibung**

Die Erfindung betrifft eine Meßeinrichtung mit einem Lichtwellenleiter-(LWL-)Biegesensor zur Überwachung von Brückenbauteilen, bei dem ein Multimode-LWL unter Einfügung einer Zwsischenschicht auf dem Bauteil befestig ist, wobei er in geraden, der Lichtwellenleitung dienenden Abschnitten und in mindestens einem stark gekrümmten, der Sensortätigkeit dienenden Abschnitt angeordnet ist, und der an den beiden Enden mit einem Lichtsender bzw. -empfänger verbunden ist. Sie ist ebenso zur überwachung anderer Bauteile und Bauwerke auf Dehnung (Zug, Druck, Biegung) und Bruch (Risse oder Spalten) geeignet, besonders bei Ingenieur-Bauwerken wie Gewölben, Dämmen oder Staumauern und bei historischen Bauwerken.

Eine entsprechende Einrichtung geht aus der DE-A- 30 15 391 hervor, wo mehrere Verfahren zur Kontrolle von zu überwachenden physikalischen Belastungsgrößen an oder in einem Bauteil angegeben sind. Hierzu sind die Lichtleitfasern von Kunstoffhüllen umgeben und auf dem zu überwachenden Bauteil befestigt, oder sie sind ohne Umhüllung in ihm eigelagert. Es ist auch angegeben, daß die Lichtleifasern in ihren Hüllen bzw. imBauteil mäanderförmig, d. h. mit starken Krümmungen, wellen- oder wendelförmig angeordnet sein können. Zu dieser Anordnung ist nur der kurze Vermerk gemacht, sie diene zur überwachung größerer Verformungen. - Man kann aber auch die Abhängigkeit der Lichtdämpfung eines LWL von veränderlichen Biegeradien des LWL gezielt zur Herstellung eines außerordentlich empfindlichen Dehnungs- oder auch Biegesensors zur Bauteileüberwachung nutzen.

Daher liegt der Erfindung die Aufgabe zugrunde, die eingangs angegebene Meßeinrichtung so auszubilden und dabei den LWL an der zu messenden Dehnungsstelle, insbesondere an einem Brückenbauteil, so anzubringen, daß bei Dehnung eine Veränderung des Biegeradius und damit der Lichtdämpfung erfolgt.

Diese Aufgabe wird durch die kennzeichnenden Merkmale des Anspruchs 1 gelöst. Die Lösung besteht im wesentlichen darin, daß a) der LWL auf einer länglichen Platte angeordnet ist, deren Unterseite auf dem Bauteil aufklebbar ist, b) die Oberseite der Platte eine Längsnut hat, in der zwei Gleitschienen mit einem Zwischenraum in der Plattenmitte angeordnet sind, und jede Schiene am äußeren Ende mit der Platte fest verschraubt, jedoch am inneren Ende mittels Langloch beweglich ist, und c) der LWL auf den Gleitschienen längs festgeklebt, aber im Zwischenraum in einem Bogen frei beweglich angeordnet ist.

Die Empfindlichkeit des Sensors wird verdoppelt, wenn gemäß Anspruch 2 der LWL vom einen zum anderen Plattenende und wieder zurück geführt wird. Damit sind zwei als Sensoren wirkende LWL-Bögen ausgebildet. Zudem erhält man den Vorteil, daß die LWL-Anschlüsse für Sender und Empfänger beieinander liegen.

Der mit der Erfindung erzielte Vorteil besteht im wesentlichen darin, daß man eine einfach zu bauende Meßeinrichtung mit einem hoch empfindlichen LWL-Biegesensor zur Überwachung von Brückenbauteilen erhält.

Die weiteren abhängigen Ansprüche betreffen vorteilhafte Ausgestaltungen der Erfindung, so Anspruch 3 die Umhüllungen des LWL, und 4 bis 6 den Aufbau der Meßeinrichtung aus Platte, Deckel und Sender/Empfängergehäuse.

Ein Ausführungsbeispiel der Erfindung ist in der Zeichnung dargestellt und wird im folgenden näher beschrieben. Es zeigen
– Fig. 1 die Draufsicht auf einen Dehnungs-Biegesensor (Prinzipbild der Plattenoberseite) mit zwei LWL-Sensorbögen in der Mitte und Sender/Empfänger-Anschlußraum rechts,
– Fig. 2 die dazugehörende Schräg/Draufsicht des Mittelteils,
– Fig. 3 das Anschlußende der Sensor-Meßeinrichtung mit Platte, Deckel und Sender/Empfänger-Einzelgehäusen und
– Fig. 4 das entsprechende Bild mit dem über die Einzelgehäuse greifenden Sender/Empfängergehäuse.

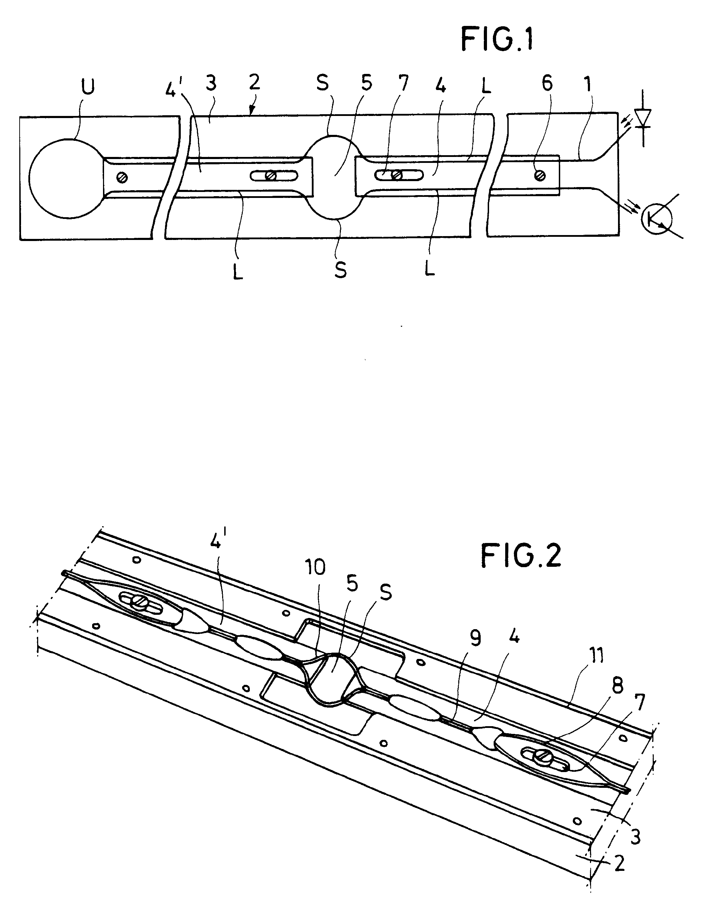

Die Fig. 1 zeigt im Prinzip, wie der LWL 1 auf der länglichen Platte 2, die aus einem artgleichen Material wie das Bauteil, beispielsweise aus Aluminium besteht, angeordnet ist. Die Unterseite der Platte ist plan, und sie wird mittels eines Konstruktionsklebers, wie er beispielsweise unter dem Handelsnamen Gupalon erhältlich ist, auf dem Bauteil aufgeklebt.

Die Oberseite 3 der Platte hat in der Längsachse eine Nut, in der die beiden Gleitschienen 4 und 4', jede von etwa 1/3 Plattenbreite und 1/3 Plattenlänge, mit einem Zwischenraum 5 in der Plattenmitte und einem Freiraum an jedem Plattenende angeordnet sind. Der Zwischenraum 5 dient als Sensorraum. Jede Gleitschiene 4 bzw. 4' ist am äußeren Ende mittels einer Schraube 6 mit der Platte 2 fest verbunden, jedoch am inneren Ende mittels eines Langlochs 7 und eines Führungsstiftes in der Plattenlängsachse beweglich.

Und der LWL 1 ist vom einen zum anderen Plattenende wie folgt geführt: auf der einen Gleitschiene 4 längs festgeklebt, im Zwischenraum 5 in einem Bogen frei beweglich zur anderen Schiene, und auf dieser Schiene 4' ebenso längs festgeklebt. Die festen LWL-Abschnitte L auf den Schienen dienen der optischen Leitung und sind für die Erfindung nicht so wesentlich wie der frei bewegliche LWL-Bogen S, der Sensorabschnitt.

Diese Sensoreinrichtung würde auch, allerdings weniger vorteilhaft, mit nur einer Gleitschiene und dem LWL-Bogen an dem beweglichen Ende der Schiene funktionieren. Die Empfindlichkeit des Sensors wird jedoch verdoppelt, wenn wie Fig. 1 zeigt der LWL 1 diesseits der Plattenlängsachse vom einen Plattenende (dem Anschlußraum) zum anderen Plattenende (dem Umlenkraum) geführt, dort in einer Schleife U umgelenkt, und jenseits der Plattenlängsachse in spiegelbildlicher Anordnung wieder zurückgeführt wird. Damit sind zwei als Sensoren wirkende LWL-Bögen S ausgebildet.

Der Biegeradius der LWL-Umlenkschleife U darf nicht kleiner als 10 mm sein, weil sonst die Grunddämpfung zu groß und damit der Sensoreffekt überdeckt würde. Der Umlenkraum bietet genügend Platz.

Zur Biegungsmessung an einer Brücke wird die Sensoreinrichtung (Unterseite der Platte 2) im Bereich des Unterzugs aufgeklebt. Die zu messende Biegung wird zunächst in eine entsprechende Dehnung umgewandelt und auf die Platte übertragen. Dort wird sie mittels der Gleitschienen in eine proportionale Biegeradiusveränderung des LWL übergeführt, und daraus wird die Lichtdämpfung hergeleitet, die nun ein Maß für die Dehnung bzw. Durchbiegung der Brücke ist. Die Lichtdämpfung ist eine umgekehrt proportionale Meßgröße für den Abstand der beiden Gleitschienen voneinander. Die Meßempfindlichkeit kann je nach dem anfänglichen LWL-Biegeradius und Schienenabstand in weiten Bereichen variiert werden (hohe Empfindlichkeit bei starker Krümmung und engem Abstand).

Fig. 2 zeigt Einzelheiten der praktischen Ausbildung der Meßeinrichtung. Der von einer harten Sekundärbeschichtung umgebene LWL 1 ist auf jeder Gleitschiene 4 bzw. 4′ im äußeren Bereich von einem PVC-Schlauch 8, und im Bereich des inneren Schienenendes von einem etwa 0,6 mm dickem Stahlröhrchen 9 umgeben, die beide mittels Konstruktionskleber auf der Schiene befestigt sind. Der Schlauch dient zum Schutz des LWL-Leitungsabschnitts L, die Führung in den Stahlröhrchen fördert die zwangsweise Biegung des LWL-Sensorabschnitts S. - Der frei bewegliche LWL-Bogen 5 ist von einem Silikonschlauch 10 umgeben, was die mechanische Stabilität des Sensors wesentlich fördert.

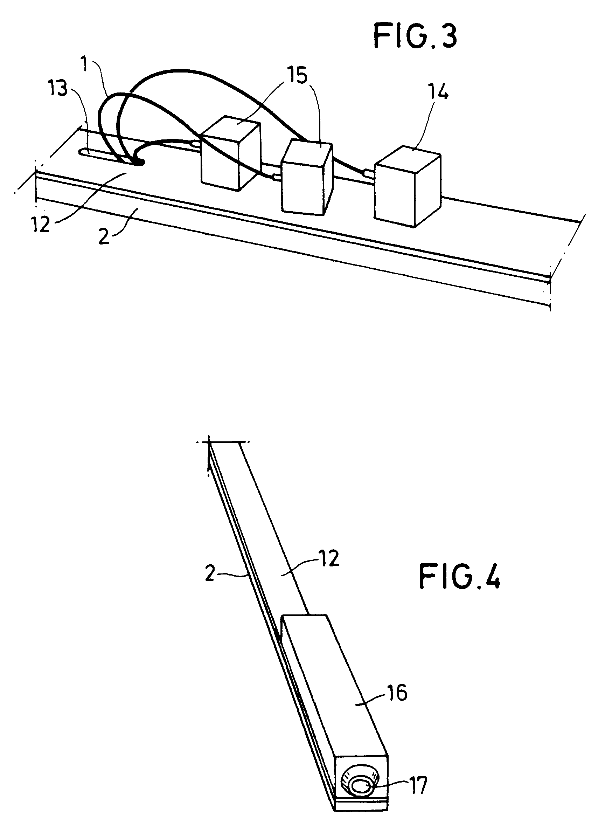

Das Sensorgehäuse ist zweischalig ausgeführt. Die Oberseite 3 der Platte 2 hat einen erhabenen Rand mit einer umlaufenden Nut für eine Silikondichtung 11 zur Feuchteabdichtung. Darauf wird ein entsprechender plattenförmiger Deckel 12 gesetzt und mit der Platte verschraubt, wie aus Fig. 3 ersichtlich ist. Darauf ist im Bereich des Anschlußendes ein quaderförmiges Gehäuse 16 (siehe Fig. 4) für Sender 14 und Empfänger 15 geschraubt, von wo aus der LWL 1 durch eine Bohrung 13 in den Anschlußraum der Platte geführt ist. - Diese Bauweise erleichtert nicht nur die Anbringung des Sensors an den beanspruchten Bauteilen, sondern auch den Zugang zu den einzelnen Sensorbauteilen auch nach der Anbringung.

Wie die Fig. 3 und 4 weiter zeigen, ist vom Lichsender zum -empfänger neben dem Sensor-LWL 1 ein diesem gleicher Referenz-LWL geführt. Im Sender/Empfängergehäuse 16 sind angeordnet: das Gehäuse 14 für die Sendediode mit Einkopplung in die beiden LWL, und die beiden Gehäuse 15 für je eine Silizium-Fotodiode mit integriertem Verstärker. Und in der äußeren Stirnfläche des Gehäuses ist eine wasserdichte 6-polige Buchse 17 für die elektrische Leitung zum Meßraum für Versorgungsspannungen und Meßsignale angeordnet.

Als Lichtsender dient eine IR-LED mit kleinem Abstrahlwinkel. Zur Erhöhung der Lichtausbeute ist sie bis in die Nahe des Targets abgeschliffen und anschließend wieder klarpoliert. Das Licht der LED ($\lambda$ = 850 nm) wird in die zwei gleichen LWL (Sensor-LWL und Referenz-LWL zur Überwachung der Sendeleistung der LED) eingekoppelt. Da man davon ausgehen kann, daß die beiden Empfangsdioden, da aus der gleichen Charge genommen, auch gleiche Alterungseigenschaften haben, ist dieser Aufbau ohne Strahlteiler gerechtfertigt. Die eingesetzten Silizium-Fotodioden mit integriertem Verstärker sind auch hinsichtlich ihres Temperaturverhaltens paarweise ausgesucht. - Die Montage der Dioden ist unkritisch. Die Sendedioden haben einen noch genügend großen Abstrahlwinkel, um genügend Licht in beide LWL einzukoppeln. Die Empfangsdioden besitzen eine Empfangsfläche von 4 mm$^2$, was in aller Regel die LWL-Justierung vor dieser Fläche einfach werden läßt.

Bezugzeichenliste:

| | |
|---|---|
| 1 | Multimode-LWL |
| L | LWL-Leitungsabschnitte |
| 5 | LWL-Sensorabschnitte |
| U | LWL-Umlenkung |
| 2 | Platte der Meßeinrichtung |
| 3 | Plattenoberseite |
| 4, 4′ | Gleitschienen |
| 5 | Raum zwischen den beiden Gleitschienen, Sensorraum |
| 6 | Schrauben |
| 7 | Langlöcher |
| 8 | PVC-Schlauch |
| 9 | Stahlröhrchen |
| 10 | Silikonschlauch |

11     Dichtung für Deckel
12     Deckel auf der Plattenoberseite
13     Bohrung im Deckel
14     Gehäuse für Sendediode, IR-LED
15     zwei Gehäuse für Empfangsdioden, Si-Fotodioden mit integriertem Verstärker
16     Sender/Empfängergehäuse
17     Steckerbuchse.

**Patentansprüche**

1. Meßeinrichtung mit einem Lichtwellenleiter-Biegesensor zur überwachung von Brückenbauteilen, bei dem ein Multimode-Lichtwellenleiter unter Einfügung einer Zwischenschicht auf dem Bauteil befestigt ist, wobei er in geraden, der Lichtwellenleitung dienenden Abschnitten und in mindestens einem stark gekrümmten, der Sensortätigkeit dienenden Abschnitt angeordnet ist, und der an den beiden Enden mit einem Lichtsender bzw. -empfänger verbunden ist, **dadurch gekennzeichnet,**
– daß der Lichtwellenleiter (1) auf einer länglichen Platte (2) aus einem gleichem oder ähnlichen Werkstoff wie das Bauteil angeordnet ist, deren Unterseite plan und auf dem Bauteil aufklebbar ist,
– und deren Oberseite (3) eine Längsnut hat, in der zwei Gleitschienen (4, 4′), jede von etwa 1/3 Plattenbreite und 1/3 Plattenlänge, mit einem Zwischenraum (5) in der Plattenmitte und einem Freiraum an jedem Plattenende angeordnet sind, wobei jede Gleitschiene (4, 4′) am äußeren Ende mit der Platte (2) fest verschraubt ist (6), jedoch am inneren Ende mittels eines Langlochs (7) und eines Führungsstiftes in der Plattenlängsachse beweglich ist,
– und daß der Lichtwellenleiter (1) vom einen zum anderen Plattenende wie folgt geführt ist: auf der einen Gleitschiene (4) längs festgeklebt, im Zwischenraum (5) in einem Bogen frei beweglich zur anderen Schiene und auf der anderen Schiene (4′) ebenso längs festgeklebt,
2. Meßeinrichtung nach Anspruch 1, **dadurch gekennzeichnet,** daß der Lichtwellenleiter (1) diesseits der Längsachse vom einen Plattenende zum anderen Plattende geführt, dort in einer Schleife (U) umgelenkt, und jenseits der Längsachse spiegelbildlich zurückgeführt ist.
3. Meßeinrichtung nach Anspruch 1 oder 2, **dadurch gekennzeichnet,**
– daß der Lichtwellenleiter (1) auf jeder Gleitschiene (4, 4′) im äußeren Bereich von einem PVC-Schlauch (8), und im Bereich des inneren Schienenendes von einem etwa 0,6 mm dicken Stahlröhrchen (9) umgeben ist, die beide mittels Konstruktionskleber auf der Schiene befestigt sind,
– und daß er im freien Bogen (S) von einem Silikonschlauch (10) umgeben ist.
4. Meßeinrichtung nach Anspruch 2 oder 3, **dadurch gekennzeichnet,**
– daß die Oberseite der Platte (2) einen erhabenen Rand mit einer umlaufenden Nut für eine Silikondichtung (11) hat,
– daß darauf ein entsprechender plattenförmiger Deckel (12) geschraubt ist,
– und daß darauf im Bereich des Anschlußendes ein quaderförmiges Gehäuse (16) für Sender und Empfänger (14, 15) geschraubt ist, von wo aus der Lichtwellenleiter (1) durch eine Bohrung (13) in den Anschlußraum der Platte geführt ist.
5. Meßeinrichtung nach Anspruch 4, **dadurch gekennzeichnet,**
– daß vom Lichtsender zum -empfänger neben dem Sensor-Lichtwellenleiter (1) ein diesem gleicher Referenz-Lichtwellenleiter geführt ist,
– daß im Sender/Empfängergehäuse (16) angeordnet sind: daß Gehäuse (14) für die Sendediode mit Einkopplung in die beiden Lichtwellenleiter, und die beiden Gehäuse (15) für je eine Fotodiode mit integriertem Verstärker,
– und daß in der äußeren Stirnfläche des Gehäuses (16) eine Stekkerbuchse (17) für die elektrische Leitung zum Meßraum angeordnet ist.
6. Meßeinrichtung nach Anspruch 4 oder 5, **dadurch gekennzeichnet,** daß Platte (2), Deckel (12) und Gehäuse (14-16) aus Aluminium sind.

**Claims**

1. Measuring apparatus having an optical waveguide bending sensor for monitoring bridge components, in which a multimode optical waveguide is secured, with the insertion of an intermediate layer, to the component, it being arranged in rectilinear sections serving to guide the light waves and in at least one highly curved section serving for sensor action, and which is connected at its two ends to a light transmitter and a light receiver respectively, characterized

– in that the optical waveguide (1) is arranged on an elongate plate (2) of a material identical or similar to the component, the underside of which plate is planar and may be stuck onto the component,

– and the upper side (3) of which has a longitudinal groove in which there are arranged two slide rails (4, 4'), each of which is approximately 1/3 the width of the plate and approximately 1/3 the length of the plate, having an intermediate space (5) in the centre of the plate and a free space at each end of the plate, each slide rail (4, 4') being fixedly screwed at the outer end to the plate (2) but being movable in the longitudinal axis of the plate at the inner end by means of a slot (7) and a guide pin,

– and in that the optical waveguide (1) is guided from one end of the plate to the other as follows: stuck fast lengthwise on one slide rail (4), freely movable to the other rail in an arc in the intermediate space (5) and also stuck fast lengthwise on the other rail (4').

2. Measuring apparatus according to Claim 1, characterized in that the optical waveguide (1) is guided on this side of the longitudinal axis from one end of the plate to the other end of the plate, deflected there in a loop (U), and guided back on the other side of the longitudinal axis in a mirror image.

3. Measuring apparatus according to Claim 1 or 2, characterized

– in that the optical waveguide (1) is surrounded on each slide rail (4, 4') in the outer region by a PVC hose (8), and in the region of the inner rail end by a steel tube (9) approximately 0.6 mm thick, both of which are secured to the rail by means of construction bonding agent,

– and in that it is surrounded in the free arc (S) by a silicone hose (10).

4. Measuring apparatus according to Claim 2 or 3, characterized

– in that the upper side of the plate (2) has a raised edge with a peripheral groove for a silicone seal (11),

– in that a corresponding plate-shaped cover (12) is screwed thereon,

– and in that a cuboid housing (16) for transmitter and receiver (14, 15) is screwed thereon in the region of the connection end, whence the optical waveguide (1) is guided through a bore (13) into the connection space of the plate.

5. Measuring apparatus according to Claim 4, characterized

– in that there is guided from the light transmitter to the light receiver beside the sensor optical waveguide (1) a reference optical waveguide (1) identical thereto,

– in that there are arranged in the transmitter/receiver housing (16): the housing (14) for the transmitter diode with coupling into the two optical waveguides (1), and the two housings (15) each for a photodiode with integrated amplifier,

– and in that there is arranged in the outer end face of the housing (16) a connector socket (17) for the electrical line to the measuring space.

6. Measuring apparatus according to Claim 4 or 5, characterized in that plate (2), cover (12) and housings (14-16) are of aluminium.


**Revendications**

1. Dispositif de mesure comportant un guide de lumière constituant un détecteur de flexion pour surveiller des éléments de ponts, avec un guide de lumière travaillant en multimode et qui est fixé à l'élément de construction avec interposition d'une couche intermédiaire, et dont les serpents droits qui servent à la transmission par guide de lumière et dont au moins un serpent, fortement courbé, sert à l'action de détection et dont les deux extrémités sont reliées à un photo-émetteur et un photo-récepteur, dispositif caractérisé en ce que :

– le guide de lumière (1) est monté sur une plaque allongée (2) en un matériau identique ou analogue à celui de l'élément de construction et dont la face inférieure est plane, le guide étant collé sur l'élément de construction,

– sa face supérieure (3) présente une rainure longitudinale dans laquelle sont placés deux rails de glissement (4, 4') ayant chacun sensiblement une largeur égale à 1/3 de la largeur de la plaque et une longueur égale à 1/3 de la longueur de plaque, avec un volume intermédiaire (5) au milieu de la plaque et un espace libre à chaque extrémité de plaque, chaque rail de glissement (4, 4') étant vissé solidairement à l'extrémité extérieure à la plaque (2, 6) alors que son extrémité intérieure est mobile grâce à un trou oblong (7) et à une tige de guidage dans l'axe longitudinal de la plaque,

– et en ce que le guide de lumière (1) est guidé d'une extrémité de la plaque vers l'autre de la manière suivante : il est solidarisé par collage le long d'un rail de glissement (4), dans le volume intermédiaire (5), il forme un arc libre en mouvement vers l'autre rail et sur cet autre rail (4'), il est également collé longitudinalement.

2. Dispositif de mesure selon la revendication 1, caractérisé en ce que le guide de lumière (1), d'un côté de l'axe longitudinal, est guidé d'une extrémité de la plaque à l'autre pour y être renvoyé en formant une boucle U et revenir symétriquement de l'autre côté de l'axe longitudinal.

3. Dispositif de mesure selon la revendication 1 ou 2, caractérisé en ce que
– le guide de lumière (1) comporte sur chaque rail de glissement (4, 4′), dans la zone extérieure, un tube (8) en PVC et au niveau de l'extrémité intérieure du rail, il est entouré d'un petit tube d'acier (9) d'une épaisseur de l'ordre de 0,6 mm et les deux tubes sont fixés aux rails par une colle technique,
– et en ce que, au niveau de l'arc libre (S), le guide de lumière est entouré par un tube en silicone (10).

4. Dispositif de mesure selon la revendication 2 ou 3, caractérisé en ce que
– le côté supérieur de la plaque (2) présente un bord relevé avec une rainure périphérique pour recevoir un joint de silicone (11),
– un couvercle (12) en forme de plaque, correspondante, étant vissé par-dessus le joint,
– et en ce que par-dessus, au niveau de l'extrémité de raccordement, il est vissé un boîtier parallélépidédique (16) pour l'émetteur et le récepteur (14, 15) et de là le guide de lumière (1) passe par un perçage (13) dans le volume de raccordement de la plaque.

5. Dispositif de mesure selon la revendication 4, caractérisé en ce que
– partant du photo-émetteur jusqu'au photo-récepteur, à côté du guide de lumière formant détecteur (1), il est prévu un guide de lumière identique, de référence,
– le boîtier émetteur/récepteur (16) comporte le boîtier (14) de la diode d'émission avec couplage dans les deux guides de lumière et les deux boîtiers (15) de chaque photodiode à amplificateur intégré,
– et en ce que dans la surface frontale extérieure du boîtier (16), il est prévu une douille de branchement (17) pour la ligne électrique vers la zone de mesure.

6. Dispositif de mesure selon la revendication 4 ou 5, caractérisé en ce que la plaque (2), le couvercle (12) et le boîtier (14-16) sont en aluminium.

## FIG.1

## FIG.2

FIG.3

FIG.4